# FASCICULE DE BREVET EUROPEEN

(11) **EP 0 421 826 B1**
(45) Date de publication et mention de la délivrance du brevet: **11.01.1995**
(21) Numéro de dépôt: 90402356.1
(22) Date de dépôt: 24.08.1990
(51) Int. Cl.: H04R 1/44, G10K 11/00

(54) **Dispositif d'équilibrage en pression d'une capacité de gaz immergée, notamment pour haut parleur sous immersion**
Druckausgleichsvorrichtung eines untergetauchten Gasvolumens, insbesondere für einen untergetauchten Lautsprecher
Pressure balancing device of a submerged gas volume, especially for a submerged loudspeaker

(30) Priorité: 31.08.1989 FR 8911416
(43) Date de publication de la demande: 10.04.1991
(73) Titulaire: ETAT FRANCAIS Représenté par le délégué général pour l'armement, F-00460 Armées (FR)
(72) Inventeur: Amiand, Vincent, F-16000 Angoulème (FR); Chauvin, Yves, F-16800 Soyaux (FR)

(56) Documents cités:
- FR-A- 2 498 866
- FR-A- 2 569 326
- US-A- 4 531 468

## Description

L'invention concerne un dispositif destiné à équilibrer les pressions externe et interne d'une capacité de gaz - et notamment d'air - immergée, munie de parois mobiles ou déformables, et ayant les caractéristiques du préambule de la revendication 1. La position des parois de la capacité de gaz ne doit pas être influencée par les variations d'immersion de la capacité de gaz.

Un exemple typique d'application d'un tel dispositif est constitué par les haut-parleurs sous-marins, destinés au dragage des mines acoustiques. L'équipression interne-externe des diaphragmes formant les faces parlantes de ces haut-parleurs, nécessaire à leur bon fonctionnement, est assurée par l'utilisation d'une vessie souple de compensation maintenue dans un réservoir à l'arrière du véhicule de dragage, la vessie étant en communication avec la capacité de gaz à équilibrer. Les moyens de montage du réservoir maintiennent celui-ci fixement au niveau général de la capacité de gaz à équilibrer.

Le principe de la mise en équipression est le suivant : toute variation d'immersion de navigation du véhicule entraîne une variation de la pression hydrostatique appliquée aux diaphragmes de haut-parleur et simultanément une compression ou une dilatation de la vessie de compensation jusqu'à ce que l'équilibre des pressions interne et externe de cette capacité de gaz soit rétabli. Cette compensation se fait de manière autonome et automatique et paraît donc satisfaisante. Mais elle souffre d'une limitation, ne permettant une immersion nominale de navigation que d'environ 8 m, avec des variations possibles de 4 m autour de cette immersion nominale.

L'invention a pour but de proposer un dispositif d'équilibrage d'une capacité de gaz immergée, compatible avec des immersions profondes et des variations importantes autour de l'immersion nominale. A titre d'exemple, une profondeur d'immersion nominale d'environ 60 m est envisagée, avec des variations de plus ou moins 30 m.

L'adaptation pure et simple de la technique connue pour les faibles immersions ne convient pas : en effet, les grandes différences de profondeur d'immersion entraînent des fortes variations de pression hydrostatique et, partant, nécessitent des variations de volume de vessie relativement importantes. Or, une vessie souple de grand volume se déforme, immergée, d'abord en sa partie basse où la pression hydrostatique est plus élevée. Cette partie basse se déplacera par rapport au réservoir fixe et donc par rapport à la capacité de gaz, et il existera entre le niveau moyen de cette partie basse et le niveau moyen fixe (par rapport à la capacité de gaz) des parois mobiles à équilibrer une différence de hauteur variable, entraînant une différence des pressions interne et externe variable au niveau des parois à équilibrer. L'équipression recherchée ne sera donc pas atteinte.

Cette difficulté est résolue conformément à l'invention du fait que les moyens de montage du réservoir maintenant la vessie de compensation sont agencés pour permettre au réservoir un déplacement relatif vertical par rapport à la capacité de gaz de manière à maintenir le front moyen des plis de la vessie au niveau du plan horizontal contenant l'axe horizontal des parois mobiles ou déformables à équilibrer lors de l'immersion plus ou moins profonde de la capacité de gaz.

Avantageusement, les moyens de montage du réservoir comprennent un moyen de guidage selon au moins une composante verticale, et un moyen de rappel élastique. Les premiers comprennent avantageusement un bras, solidaire du réservoir et articulé autour d'un axe horizontal, tandis que les seconds comprennent un ressort exerçant son action sur un câble relié au bras articulé, de préférence par l'intermédiaire d'un secteur solidaire du bras et autour duquel le câble s'enroule partiellement.

Il est avantageux de prévoir un réservoir de chaque côté de la capacité de gaz.

L'application préférée de l'invention est l'équilibrage des faces parlantes des haut-parleurs sous-marins.

D'autres caractéristiques et avantages de l'invention ressortiront de la description suivante, se référant aux dessins annexés sur lesquels :
- les figures 1A, 1B, 1C sont trois vues schématiques d'une capacité munie de deux réservoirs de vessies de compensation, mobiles par rapport à la capacité, à trois stades d'immersion.
- La figure 2 est une vue latérale d'un réservoir et de sa vessie interne de compensation.
- La figure 3 est une vue schématique montrant les moyens de montage d'un réservoir et de sa vessie de compensation au côté de la capacité à équilibrer.
- La figure 4 montre l'implantation du dispositif de l'invention dans un véhicule sous-marin pour la chasse aux mines acoustiques.

La capacité d'air immergée 1 est étanche et comprend une paroi mobile devant rester indifférente aux variations d'immersion autour d'une immersion nominale. Une telle paroi mobile peut être constituée par le diaphragme d'un haut-parleur sous-marin.

On désigne par O l'axe horizontal de la paroi à équilibrer, et par H le plan horizontal contenant cet axe.

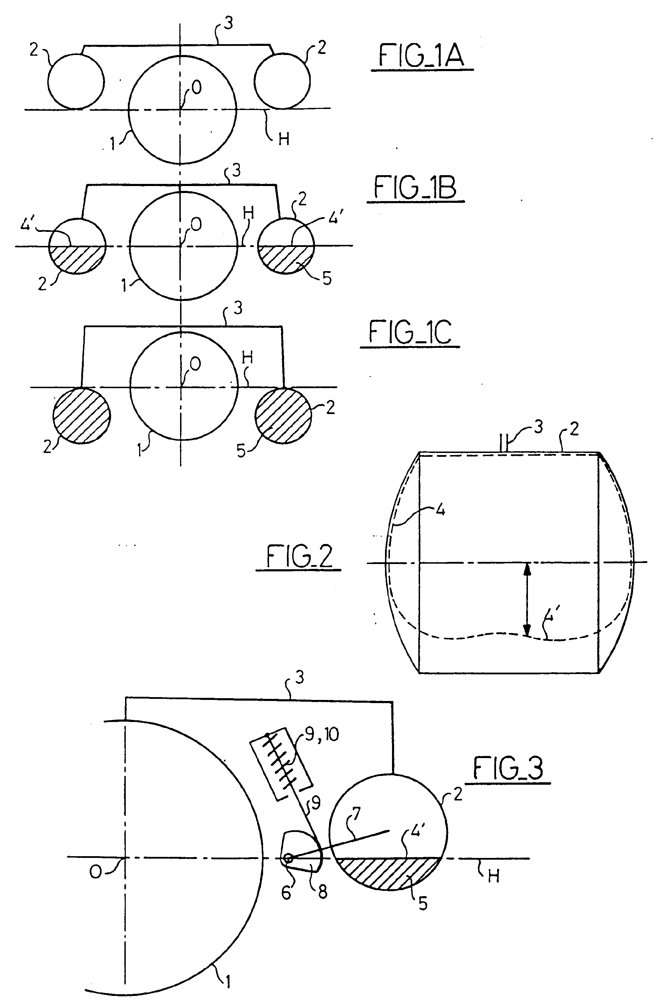

De part et d'autre de la capacité d'air 1, on prévoit un réservoir mobile 2, contenant chacun une vessie souple 4 (figure 2) dont le volume intérieur est relié par une communication souple, schématisée en 3, au volume intérieur de la capacité d'air 1.

Les réservoirs 2 comportent dans leur paroi des orifices de passage non représentés communiquant avec le milieu extérieur, c'est-à-dire avec l'eau environnante, de manière que les vessies 4 qu'ils contiennent soient soumises à la pression hydrostatique ambiante. Comme la pression hydrostatique s'exerçant sur le bas de la vessie 4 est supérieure à celle qui s'exerce sur le haut, la vessie 4 soumise à une pression qui augmente avec la profondeur de l'immersion va se contracter de bas en haut en formant des plis 4′ définissant un front sensiblement horizontal.

Selon le principe de l'invention, illustré très schématiquement sur les figures 1A, 1B et 1C, les moyens de montage des réservoirs 2 par rapport à la capacité 1 sont tels que le front moyen bas 4′ de la vessie 4 se trouve sensiblement toujours dans le plan H contenant l'axe O des parois mobiles de la capacité 1 à équilibrer, et ce, dans une plage de variation de profondeur d'immersion autour de la profondeur nominale d'immersion de la capacité 1.

Pour cela, il convient comme le montrent les figures 1A et 1C que les réservoirs soient mobiles entre :
- une position haute (figure 1A) où les vessies ne sont pas contractées dans les réservoirs 2, c'est-à-dire que le point bas des réservoirs 2 est sensiblement tangent au plan H
- et une position basse (figure 1C) où les vessies sont complètement (ou presque) écrasées dans les réservoirs 2, lesquels sont alors remplis d'eau 5, et sont sensiblement tangents au plan H au niveau de leur partie supérieure.

Entre ces deux positions extrêmes, existent toutes sortes de positions intermédiaires telles que celle de la figure 1B, où les vessies sont en partie contractées dans les réservoirs 2, toujours de manière telle que le front moyen des plis 4′ de la vessie soit sensiblement dans le plan H.

Dans ces conditions, on comprend que, conformément à l'invention, la pression d'air régnant dans les vessies de compensation 4 est toujours égale à la pression hydrostatique au niveau du plan H, et donc que la pression d'équilibrage offerte par lesdites vessies au volume interne de la capacité 1 soit précisément celle qui règne à l'extérieur des parois mobiles de la capacité, de sorte que celles-ci sont parfaitement équilibrées et ne se déplacent pas malgré les variations de profondeur d'immersion.

Les moyens de montage mobile des réservoirs 2 sur la capacité 1 sont réalisables sous diverses formes.

C'est ainsi qu'il est possible de prévoir que les réservoirs 2 sont montés mobiles en translation verticale, et soutenus par un dispositif à ressort.

Toutefois, dans une forme préférée d'exécution, (figure 3), chaque réservoir 2 est monté sur un système de charnières ou articulations 6 d'axe horizontal par un bras 7.

Un secteur circulaire de renvoi 8, lié au bras 7 du réservoir 2, est centré sur l'articulation 6 et reçoit sur une gorge formée dans sa périphérie circulaire une extrémité d'un câble 9 dont l'autre extrémité est liée à un ressort de rappel 10, lui-même solidaire d'un point fixe du châssis.

Lors de la descente sous-marine du système à équilibrer, la vessie 4 se contracte, la poussée d'Archimède s'exerçant sur elle diminue donc; son poids apparent dans l'eau augmente, et le couple s'exerçant sur le bras 7 (tendant à faire pivoter le réservoir dans le sens horaire) augmente.

Ce couple est centré par le moment de rappel imposé sur le bras 7 par le ressort 10 qui se comprime progressivement assurant la descente réglée du réservoir 2, tout en le maintenant.

Lors de la remontée du système à équilibrer, le fonctionnement inverse se produit.

Il est possible de prévoir des butées, hautes et basses, délimitant les déplacements possibles du réservoir.

Par ailleurs, on peut pour moduler le contre-couple de rappel exercé par le câble 9 prévoir un secteur d'enroulement 8, non pas circulaire, mais à rayon variable, et/ou un ressort 10 de rappel à raideur variable.

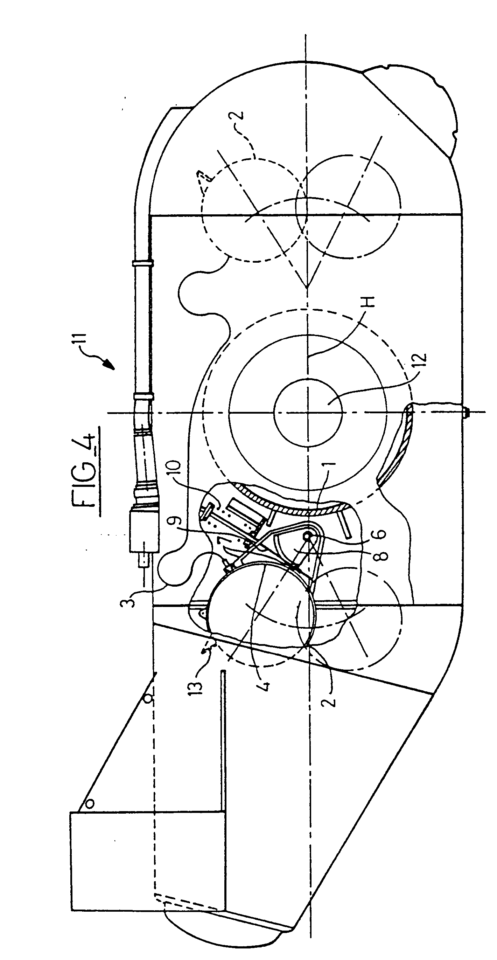

La figure 4 illustre l'implantation du dispositif conforme à l'invention dans un véhicule sous-marin 11 pour la chasse aux mines acoustiques.

On sait qu'un tel véhicule est destiné à influencer les mises à feu acoustiques des mines dans le but de les détruire en les faisant exploser. Il constitue l'émetteur sonore du système de dragage et peut-être remorqué à distance (par exemple 450 m) derrière le bâtiment porteur, ou bien naviguer de façon autonome.

La capacité 1 comporte l'émetteur principalement constitué par un double haut-parleur. Les faces parlantes sont deux diaphragmes hémisphériques 12 disposés latéralement et se mouvant en opposition de phase. L'étanchéité de ces diaphragmes est assurée par des joints circulaires déformables en caoutchouc.

Le véhicule 11 comprend deux réservoirs 2 d'environ 80 l à l'avant et à l'arrière de la capacité 1. Chaque réservoir est constitué par un cylindre allongé à parois frontales arrondies, maintenus sur deux génératrices par deux bras doubles 7, montés en pivotement sur un axe d'articulation 6 (ou deux demi-axes) prévus dans une chape solidaire du châssis du véhicule 11. Contre l'intérieur d'un des bras doubles 7, un secteur solidaire 8 est monté. Une extrémité d'un câble 9 est fixée au secteur 8 et son autre extrémité à un ressort 10 fixé au châssis du véhicule 11.

Les vessies 4 des deux réservoirs 2 sont en communication par une liaison souple 3, elle-même raccordée (de manière non représentée) à l'intérieur de la capacité 1.

Les réservoirs 2 comportent, fixé sur un génératrice, un volet rectangulaire 13 anti-tangage destiné à amortir les mouvements parasites d'oscillations rapides du réservoir, en provoquant un couple résistant visqueux, dû à la traînée dans l'eau de ce plan.

La figure 4 montre les réservoirs 2 en position haute, ainsi qu'une esquisse des réservoirs en position basse.

Ces positions correspondent à une immersion comprise entre environ 35 m et 90 m.

## Revendications

1. Dispositif d'équilibrage entre pressions externes et internes d'une capacité de gaz (1) immergée munie de parois mobiles ou déformables (12), ce dispositif comprenant une vessie de compensation (4) souple et immergée, maintenue dans un réservoir (2) muni d'orifices de passage communiquant avec le milieu extérieur, ladite vessie (4) communiquant avec ladite capacité de gaz (1) et étant disposée grâce à des moyens de montage au niveau général de celle-ci, caractérisé en ce que les moyens de montage du réservoir (2) de la vessie de compensation (4) sont agencés pour permettre au réservoir (2) un déplacement relatif vertical par rapport à la capacité de gaz (1), de manière à maintenir le front moyen (4′) des plis de la vessie (4) au niveau du plan horizontal (H) contenant l'axe horizontal (O) des parois mobiles ou déformables (12) à équilibrer lors de l'immersion plus ou moins profonde de la capacité de gaz (1).

2. Dispositif selon la revendication 1, caractérisé en ce que les moyens de montage du réservoir (2) comprennent un moyen de guidage (6,7,8) selon au moins une composante verticale, et un moyen de rappel élastique (9,10).

3. Dispositif selon la revendication 2, caractérisé en ce que les moyens de montage du réservoir (2) comprennent un bras (7), solidaire du réservoir (2) et articulé autour d'un axe horizontal (6).

4. Dispositif selon la revendication 3, caractérisé en ce que le moyen de rappel (9,10) comprend un ressort (10) exerçant son action sur un câble (9) relié au bras articulé (7).

5. Dispositif selon la revendication 4, caractérisé en ce que le câble (9) est relié au bras articulé (7) par l'intermédiaire d'un secteur (8) solidaire du bras (7) et autour duquel il s'enroule partiellement.

6. Dispositif selon l'une quelconque des revendications 1 à 5, caractérisé en ce qu'il comprend un second réservoir (2) situé de l'autre côté de la capacité de gaz (1) à équilibrer.

7. Dispositif selon l'une quelconque des revendications 1 à 6, caractérisé en ce que la capacité de gaz (1) à équilibrer a comme parois mobiles des faces parlantes (12) de haut-parleur sous-marin.

## Patentansprüche

1. Vorrichtung zum Ausgleich der internen und externen Drücke eines eingetauchten Gasbehälters (1) mit beweglichen oder verformbaren Wänden (12), wobei diese Vorrichtung aus einer elastischen und eingetauchten Ausgleichsblase (4) besteht, die in einem Tank (2) festgehalten wird, der mit der äußeren Umgebung verbundene Durchlauföffnungen aufweist, wobei die besagte Blase (4) mit dem besagten Behälter (1) verbunden und dank Montagemitteln auf seiner allgemeinen Ebene angeordnet ist, dadurch gekennzeichnet, daß die Montagemittel des Tanks (2) der Ausgleichsblase (4) so angeordnet sind, daß sie dem Tank (2) eine relative senkrechte Verschiebung in bezug auf den Gasbehälter (1) ermöglichen, so daß die mittlere Front (4′) der Falten des Blase (4) auf der waagerechten Ebene (H) mit der waagerechten Achse (O) der beweglichen oder verformbaren auszugleichenden Wände bei einer mehr oder weniger großen Tauchtiefe des Gasbehälters (1) festgehalten wird.

2. Vorrichtung nach Anspruch 1, dadurch gekennzeichnet, daß die Montagemittel des Tanks (2) ein Führungsmittel (6, 7, 8) nach mindestens einer senkrechten Komponente und ein elastisches Rückzugmittel (9, 10) umfassen.

3. Vorrichtung nach Anspruch 2, dadurch gekennzeichnet, daß die Montagemittel des Tanks (2) einen Arm (7) umfassen, der am Tank (2) befestigt und gelenkig um eine waagerechte Achse (6) herum angeordnet ist.

4. Vorrichtung nach Anspruch 3, dadurch gekennzeichnet, daß das Rückzugmittel (9, 10) eine Feder (10) umfaßt, die auf ein am Gelenkarm (7) angeschlossenes Kabel (9) wirkt.

5. Vorrichtung nach Anspruch 4, dadurch gekennzeichnet, daß das Kabel (9) mittels eines am Arm (7) befestigten Abschnitts (8) mit dem Gelenkarm (7) verbunden ist, um den es sich teilweise aufwickelt.

6. Vorrichtung nach einem der Ansprüche 1 bis 5, dadurch gekennzeichnet, daß sie einen zweiten Tank (2) umfaßt, der auf der anderen Seite des auszugleichenden Gasbehälters (1) angeordnet ist.

7. Vorrichtung nach einem der Ansprüche 1 bis 6, dadurch gekennzeichnet, daß die beweglichen Wände des auszugleichenden Gasbehälters (1) Sprechseiten (12) eines Untersee-Lautsprechers sind.

## Claims

1. Pressure compensating device for a immersed volume gas (1) equipped with mobile or deformable walls (12), which device includes an immersed flexible compensation bladder (4) held in a housing with orifices communication with the outside medium , said bladder (4) communicating with said volume and being arranged by mounting means roughly at the general level of the volume, wherein the mounting means of the compensating bladder housing (2) are arranged to allow the housing (2), to move in relative vertical translation with respect to the gas volume(1) so as to keep the mean front (4) of the folds of the bladder (4), at the level of the horizontal plan (H) containing the horizontal axe (O) of the walls mobile or deformable (12) to be compensated when the volume is raised or lowered depth.

2. The device of claim 1, wherein the housing (2) mounting means includes means of guidance (6,7,8) along at least a vertical component, and elastical recall means (9,10).

3. The device of claim 2, wherein the housing (2) mounting means includes an arm (7) hinged about horizontal shaft (6).

4. The device of claim 3, wherein the recall means (9,10) includes a spring (10), exerting its force on a cable (9) connected to the hinged arm (7).

5. The device of claim 4, wherein the cable (9) is connected to the hinged arm (7) by means of a sector (8), integral with the arm, and around which it partially bends.

6. The device of claim 1, wherein it includes a second housing (2) located to either side of the volume of gas (4) to be compensated.

7. The device of claim 1, wherein the volume of gas (1) to be compensated has the acoustic drives (12) of underwater electroacoustique transducers as mobile walls.
